# EUROPEAN PATENT APPLICATION

(11) **EP 4 835 291 A1**
(43) Date of publication of application: **04.11.2026**
(21) Application number: 26172710.1
(22) Date of filing: 16.04.2026
(51) Int. Cl.: F03D 17/00

(54) **SYSTEM AND METHOD FOR IMPROVING WIND TURBINE ROTOR BLADE QUALITY USING MACHINE-LEARNED MODELS**

(30) Priority: 16.04.2025 US 202519180761
(71) Applicant: GE Vernova Infrastructure Technology LLC, Greenville, SC 29615 (US)
(72) Inventor: Venkataramana, Raju D., Niskayuna, NY, 12309 (US); Jain, Arpit, Niskayuna, NY, 12309 (US); Schwid, Zachary Ellis, Niskayuna, NY, 12309 (US)
(74) Representative: Zimmermann & Partner Patentanwälte mbB

(57) **Abstract**

A method for improving quality of a rotor blade of a wind turbine includes receiving, via a data acquisition module of a controller, data relating to the rotor blade. The data relating to the rotor blade is collected during or after manufacturing of the rotor blade before the rotor blade is placed into operation on the wind turbine. The method also includes processing, via a processor of the controller, the data relating to the rotor blade. Further, the method includes determining, via a model execution module of the controller, a sequence for executing a subset of a plurality of machine-learned models based on one or more hyperparameters of the plurality of machine-learned models and one or more infrastructure constraints. Furthermore, the method includes executing, via the model execution module, the subset of the plurality of machine-learned models based on the sequence. Moreover, the method includes identifying, via the subset of the plurality of machine-learned models, one or more anomalies on the rotor blade using the processed data relating to the rotor blade. In addition, the method includes implementing, via the processor, a corrective action for the one or more anomalies of the rotor blade or a subsequent manufacturing process of another rotor blade based on the one or more anomalies of the rotor blade.

## Description

### FIELD

The present disclosure generally relates to wind turbines, and more particularly, to automated systems and methods for improving wind turbine rotor blade quality using machine-learned models.

### BACKGROUND

Wind power is considered one of the cleanest, most environmentally friendly energy sources presently available, and wind turbines have gained increased attention in this regard. A modem wind turbine typically includes a tower, generator, gearbox, nacelle, and one or more rotor blades. The rotor blades capture kinetic energy of wind using known airfoil principles. For example, rotor blades typically have the cross-sectional profile of an airfoil such that, during operation, air flows over the blade producing a pressure difference between the sides. Consequently, a lift force, which is directed from a pressure side towards a suction side, acts on the blade. The lift force generates torque on the main rotor shaft, which is typically geared to a generator for producing electricity.

The rotor blades generally include a suction side shell and a pressure side shell typically formed using molding processes that are bonded together at bond lines along the leading and trailing edges of the blade. Further, the pressure and suction shells are relatively lightweight and have structural properties (e.g., stiffness, buckling resistance and strength) which are not configured to withstand the bending moments and other loads exerted on the rotor blade during operation. Thus, to increase the stiffness, buckling resistance and strength of the rotor blade, the body shell is typically reinforced using one or more structural components (e.g. opposing spar caps with a shear web configured therebetween) that engage the inner pressure and suction side surfaces of the shell halves.

The spar caps are typically constructed of various materials, including but not limited to glass fiber laminate composites and/or carbon fiber laminate composites. The shell of the rotor blade is generally built around the spar caps of the blade by stacking layers of fiber fabrics in a shell mold. The layers are then typically infused together to form the rotor blade. Accordingly, some rotor blades generally have a sandwich panel configuration. Still other rotor blades are formed via a plurality of blade segments.

Existing methods for providing quality control to manufactured rotor blades are manually driven processes that generally involve non-standardized processes. Therefore, such methods are often inconsistent, time-consuming, and error prone. Accordingly, the present disclosure is directed to providing automated systems and methods of improving wind turbine rotor blade quality using machine-learned models to ensure the resulting rotor blades satisfy a certain quality standard.

### BRIEF DESCRIPTION

Aspects and advantages of the invention will be set forth in part in the following description, or may be obvious from the description, or may be learned through practice of the invention.

In an aspect, the present disclosure is directed to a method for improving quality of a rotor blade of a wind turbine. The method includes receiving, via a data acquisition module of a controller, data relating to the rotor blade. The data relating to the rotor blade is collected during or after manufacturing of the rotor blade before the rotor blade is placed into operation on the wind turbine. The method also includes processing, via a processor of the controller, the data relating to the rotor blade. Further, the method includes determining, via a model execution module of the controller, a sequence for executing a subset of a plurality of machine-learned models based on one or more hyperparameters of the plurality of machine-learned models and one or more infrastructure constraints. Furthermore, the method includes executing, via the model execution module, the subset of the plurality of machine-learned models based on the sequence. Moreover, the method includes identifying, via the subset of the plurality of machine-learned models, one or more anomalies on the rotor blade using the processed data relating to the rotor blade. In addition, the method includes implementing, via the processor, a corrective action for the one or more anomalies of the rotor blade or a subsequent manufacturing process of another rotor blade based on the one or more anomalies of the rotor blade.

In another aspect, the present disclosure is directed to a system for improving quality of a rotor blade of a wind turbine. The system includes a controller comprising at least one processor and a data acquisition module. The data acquisition module is configured to receive data relating to the rotor blade. The data relating to the rotor blade is collected during or after manufacturing of the rotor blade before the rotor blade is placed into operation on the wind turbine. The at least one processor is configured to perform a plurality of operations. The plurality of operations includes processing the data relating to the rotor blade. The plurality of operations also includes determining, via a model execution module of the controller, a sequence for executing a subset of a plurality of machine-learned models based on one or more hyperparameters of the plurality of machine-learned models and one or more infrastructure constraints. Further, the plurality of operations includes executing, via the model execution module, the subset of the plurality of machine-learned models based on the sequence. Furthermore, the plurality of operations includes identifying, via the subset of the plurality of machine-learned models, one or more anomalies on the rotor blade using the processed data relating to the rotor blade. In addition, the plurality of operations includes implementing a corrective action for the one or more anomalies of the rotor blade or a subsequent manufacturing process of another rotor blade based on the one or more anomalies of the rotor blade.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of an embodiment of a wind turbine according to the present disclosure;
FIG. 2 illustrates a schematic diagram of an embodiment of a wind farm according to the present disclosure;
FIG. 3 illustrates a schematic diagram of an embodiment of a controller for monitoring a rotor blade according to the present disclosure;
FIG. 4 illustrates a flow diagram of an embodiment of a method for improving quality of a rotor blade of a wind turbine according to the present disclosure;
FIG. 5 illustrates a perspective view of an embodiment of an intelligent vehicle collecting data relating to a rotor blade by scanning a surface thereof according to the present disclosure;
FIG. 6 illustrates a perspective view of an embodiment of various anomalies on a surface of a rotor blade as scanned by an intelligent vehicle according to the present disclosure;
FIG. 7 illustrates a sample image of a rotor blade generated by systems and methods of the present disclosure, particularly illustrating a rotor blade having different anomalies; and
FIG. 8 illustrates a schematic diagram of an embodiment of a system for improving quality of a rotor blade of a wind turbine according to the present disclosure.

### DETAILED DESCRIPTION

Reference now will be made in detail to embodiments of the present disclosure, one or more examples of which are illustrated in the drawings. Each example is provided by way of explanation of the present disclosure, not limitation of the present disclosure. In fact, it will be apparent to those skilled in the art that various modifications and variations can be made in the present disclosure without departing from the scope or spirit of the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

In the following specification and the claims, reference will be made to a number of terms, which shall be defined to have the following meanings.

The singular forms "a", "an", and "the" include plural references unless the context clearly dictates otherwise.

Approximating language, as used herein throughout the specification and claims, may be applied to modify any quantitative representation that could permissibly vary without resulting in a change in the basic function to which it is related. Accordingly, a value modified by a term or terms, such as "about," "substantially," and "approximately," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

In general, the present disclosure is directed to quality inspection and/or quality certification systems and methods for improving wind turbine rotor blade quality using machine-learned models. More specifically, in an embodiment, the present disclosure is directed to systems and methods that determine a sequence for executing a plurality of machine-learned models. In an embodiment, the sequence can be determined based on hyperparameters to optimize execution of the plurality of machine-learned models given one or more infrastructure constraints. The data can then be processed by the machine-learned models according to the sequence to enable automated detection and categorization of anomalies. Further, the systems and methods of the present disclosure are configured to drive a digital process to correct critical defects and document other anomalies, thereby generating a quality control certificate that can serve as a digital blade record for the rotor blade.

Certain technical advantages for the present disclosure include dynamically adjusting the sequence for executing the plurality of machine-learned models based on continuously receiving updated infrastructure constraints. As such, the systems and methods of the present disclosure can continuously optimize the sequence for executing the plurality of machine-learned models, which allows for executing a maximum number of machine-learned models to monitor for a maximum number of different types of anomalies at a given time. Still further advantages include faster turnaround time for quality certification, better disposition of operating blade damages, historical comparison of blade anomalies, anomaly comparison across blade models and regions of operations, and improved propagation models for blade damages. Furthermore, the quality certification system of the present disclosure provides a system for consistently delivering high quality rotor blades across multiple manufacturing lines.

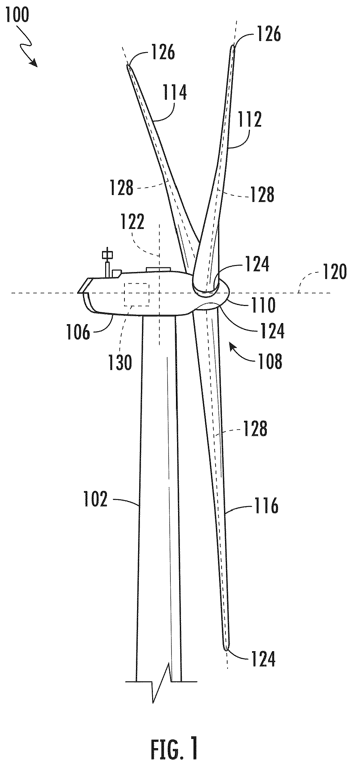

Referring now to FIG. 1, a schematic perspective view of a wind turbine 100 according to the present disclosure is illustrated. As shown in the exemplary embodiment, the wind turbine 100 is a horizontal axis wind turbine. Further, as shown, the wind turbine 100 includes a tower 102 extending from a supporting surface (not shown), a nacelle 106 coupled to tower 102, and a rotor 108 coupled to nacelle 106. Moreover, as shown, the rotor 108 has a rotatable hub 110 and a plurality of blades 112, 114, 116 coupled to rotatable hub 110. In the illustrated embodiment, the rotor 108 has a first blade 112, a second blade 114, and a third blade 116. In alternative embodiments, the rotor 108 may have any number of blades 112, 114, 116 that enables the wind turbine 100 to function as described herein.

In certain embodiments, the tower 102 may be fabricated from tubular steel or any other suitable material that enables the wind turbine 100 to operate as described herein. For example, in some embodiments, the tower 102 is any one of a lattice steel tower, guyed tower, concrete tower, and/or hybrid tower.

Still referring to FIG. 1, as shown, the blades 112, 114, 116 are positioned about the rotatable hub 110 to facilitate rotating the rotor 108 when wind flows through the wind turbine 100. Thus, when the rotor 108 rotates, kinetic energy from the wind is transferred into usable mechanical energy, and subsequently, electrical energy. During operation, the rotor 108 rotates about a rotation axis 120 that is substantially parallel to the supporting surface. In addition, in some embodiments, the rotor 108 and the nacelle 106 are rotated about the tower 102 on a yaw axis 122 to control the orientation of the blades 112, 114, 116 with respect to the direction of wind. In alternative embodiments, the wind turbine 100 includes any rotor 108 that enables the wind turbine 100 to operate as described herein.

In particular embodiments, as shown, each blade 112, 114, 116 is coupled to the rotatable hub 110 at a hub end 124 and extends radially outward from rotatable hub 110 to a distal end 126. Each blade 112, 114, 116 defines a longitudinal axis 128 extending between hub end 124 and distal end 126. In alternative embodiments, the wind turbine 100 includes any blade 112, 114, 116 that enables wind turbine 100 to operate as described herein.

The wind turbine 100 may also include a wind turbine controller 130 centralized within the nacelle 106. However, in other embodiments, the controller 130 may be located within any other component of the wind turbine 100 or at a location outside the wind turbine 100. Further, the controller 130 may be communicatively coupled to any number of the components of the wind turbine 100 in order to control the operation of such components and/or implement a corrective or control action. As such, the controller 130 may include a computer or other suitable processing unit. Thus, in several embodiments, the controller 130 may include suitable computer-readable instructions that, when implemented, configure the controller 130 to perform various different functions, such as receiving, transmitting and/or executing wind turbine control signals. Accordingly, the controller 130 may generally be configured to control the various operating modes (e.g., start-up or shutdown sequences), de-rating or up-rating the wind turbine, and/or individual components of the wind turbine 100.

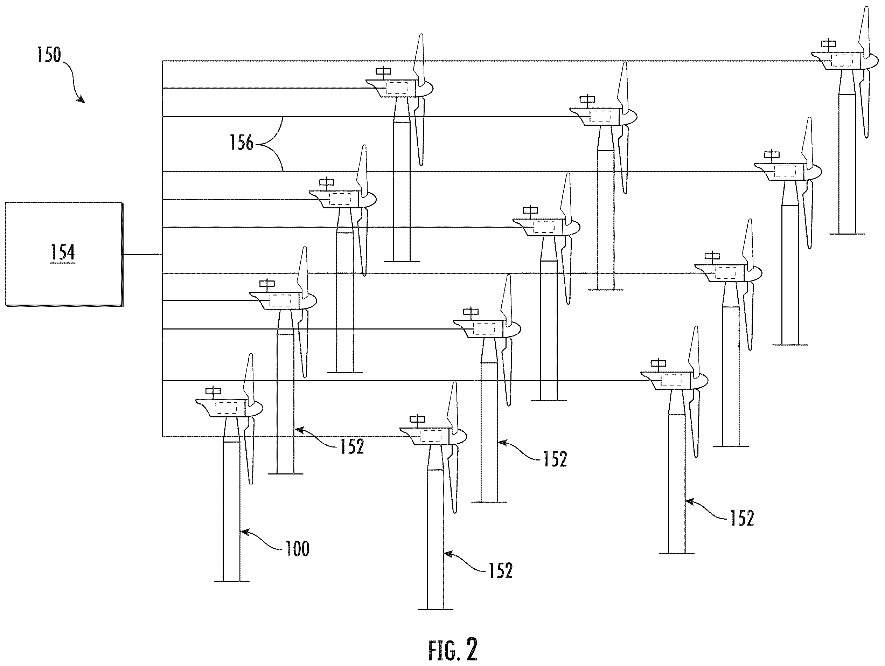

Referring now to FIG. 2, the wind turbine 100 described herein may be part of a wind farm 150 that is controlled according to the system and method of the present disclosure is illustrated. As shown, the wind farm 150 may include a plurality of wind turbines 152, including the wind turbine 100 described above, and a farm-level controller 154. For example, as shown in the illustrated embodiment, the wind farm 150 includes twelve wind turbines, including wind turbine 100. However, in other embodiments, the wind farm 150 may include any other number of wind turbines, such as less than twelve wind turbines or greater than twelve wind turbines. In one embodiment, the controller 130 of the wind turbine 100 may be communicatively coupled to the farm-level controller 154 through a wired connection, such as by connecting the controller 130 through suitable communicative links 156 or networks (e.g., a suitable cable). Alternatively, the controller 130 may be communicatively coupled to the farm-level controller 154 through a wireless connection, such as by using any suitable wireless communications protocol known in the art. In addition, the farm-level controller 154 may be generally configured similar to the controller 130 for each of the individual wind turbines 152 within the wind farm 150.

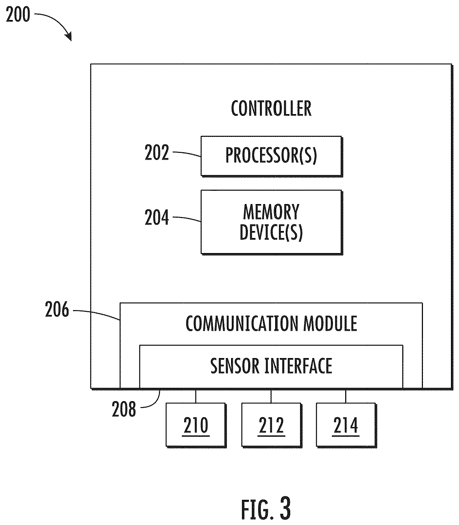

Referring now to FIG. 3, a block diagram of an embodiment of a controller 200 in accordance with aspects of the present disclosure is illustrated. For example, the controller 200 may be configured to monitor a quality of rotor blades 112, 114, 116 during a manufacturing process (i.e., the controller 200 may be associated with and/or located at a manufacturing facility for rotor blades). As shown, the controller 200 may include one or more processor(s) 202 and associated memory device(s) 204 configured to perform a variety of computer-implemented functions (e.g., performing the methods, steps, calculations and the like and storing relevant data as disclosed herein). Additionally, the controller 200 may also include a communications module 206 to facilitate communications between the controller 200 and the various components of the wind farm 150. Further, the communications module 206 may include a sensor interface 208 (e.g., one or more analog-to-digital converters) to permit signals transmitted from one or more sensors 210, 212, 214 to be converted into signals that can be understood and processed by the processors 202. It should be appreciated that the sensors 210, 212, 214 may be communicatively coupled to the communications module 206 using any suitable means. For example, as shown, the sensors 210, 212, 214 are coupled to the sensor interface 208 via a wired connection. However, in other embodiments, the sensors 210, 212, 214 may be coupled to the sensor interface 208 via a wireless connection, such as by using any suitable wireless communications protocol known in the art.

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 204 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory device(s) 204 may generally be configured to store suitable computer-readable instructions that, when implemented by the processor(s) 202, configure the controller 200 to perform various functions as described herein.

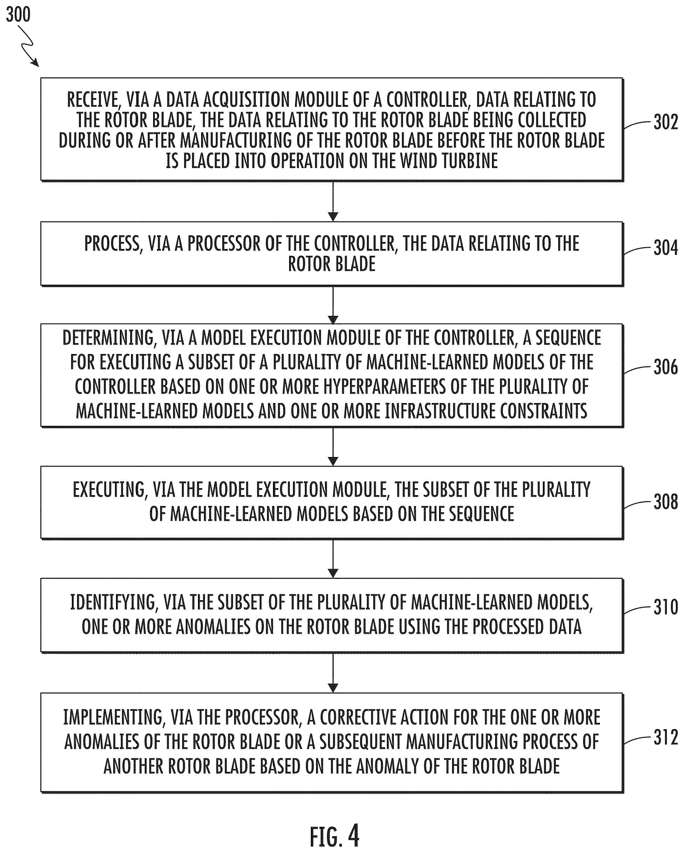

Referring now to FIG. 4, a flow diagram of one embodiment of a method 300 for improving quality of a rotor blade of a wind turbine during manufacturing according to the present disclosure is illustrated. In general, the method 300 will be described herein with reference to the wind turbine 100 described above with reference to FIGS. 1-3. However, it should be appreciated by those of ordinary skill in the art that the disclosed method 300 may generally be utilized with any wind turbine having any suitable configuration. In addition, although FIG. 4 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure. Moreover, in an embodiment, the method 300 may be performed by the controller 130, a separate controller, or via the cloud.

As shown at (302), the method 300 includes receiving, via a data acquisition module of a controller, data relating to the rotor blade 112. In an embodiment, the data relating to the rotor blade 112 is collected during or after manufacturing of the rotor blade 112 before the rotor blade 112 is placed into operation on the wind turbine 100. In such embodiments, for example, the data may include high resolution data, such as one or more 360° videos of the rotor blade 112, one or more 180° videos of the rotor blade 112, one or more images/pictures of the rotor blade 112, Light Detection and Ranging (LIDAR) data, field data, or similar.

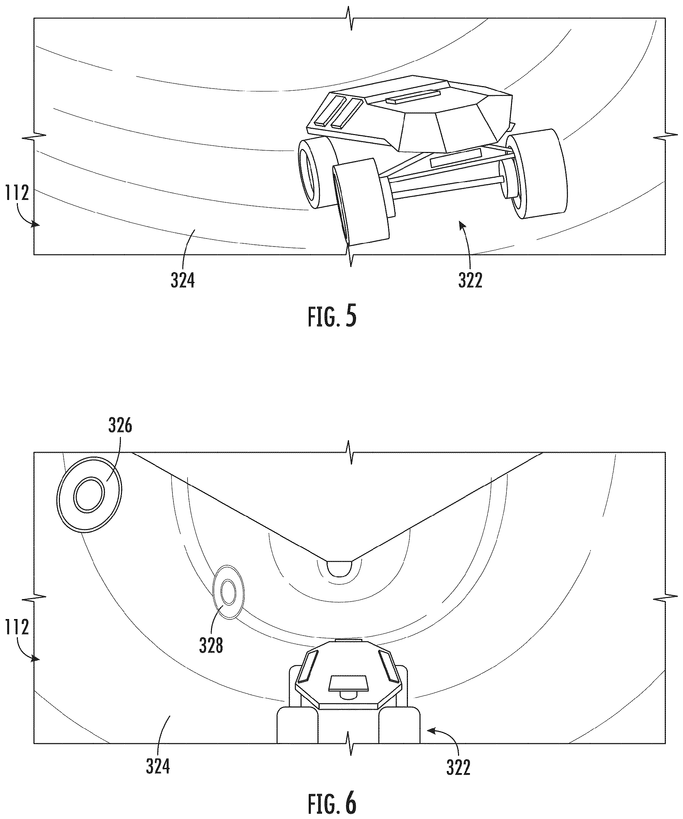

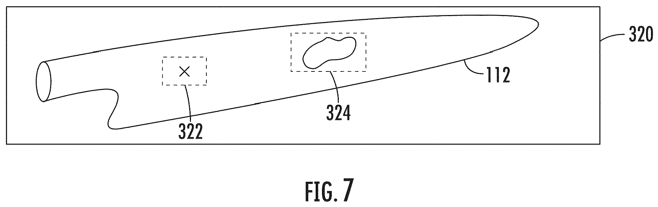

More specifically, as shown in FIGS. 5 and 6, the high resolution data relating to the rotor blade 112 described herein may be collected by operating an intelligent vehicle 322, such as a semi-autonomous intelligent vehicle, across a surface 324 of the rotor blade 112. Accordingly, in an embodiment, as shown in FIG. 7, the high resolution image data may include an image 320 of the rotor blade 112 (in whole or in part) collected by the imaging device(s) that depicts one or more anomalies 326, 328. The intelligent vehicle 322 described herein may include any suitable crawler, robot, drone, or similar capable of being automatically driven or otherwise controlled (such as via remote control, manually operated, etc.) across the surface of the rotor blade 112 and/or throughout an interior and/or exterior of the rotor blade 112 for collecting data relating to the rotor blade 112. Thus, in various embodiments, the intelligent vehicle 322 may include wheels, tracks, propellers, or similar, or combinations thereof.

Referring back to FIG. 4, as shown at (304), the method 300 includes processing, via a processor of the controller, the data relating to the rotor blade 112, such as the images of the rotor blade 112 containing the anomalies. For example, in an embodiment, processing the data relating to the rotor blade 112 may include extracting one or more images/pictures 320 from one or more videos collected by the data acquisition module. Furthermore, the method 300 may include correlating the image(s) 320 to an actual location on the rotor blade 112 using a model representation of the rotor blade 112. For example, in an embodiment, the method 300 may include generating the model representation of the rotor blade 112 using LIDAR. In particular embodiments, LIDAR can be used to identify a position of an anomaly 326, 328 on the rotor blade 112. In other words, processing the data provides a correlation of a pixel representation of the rotor blade 112 (e.g., details of the anomaly 326, 328) with a geometric representation of the rotor blade 112 (e.g., where the anomaly 326, 328 is located on or within the rotor blade 112).

As shown at (306), the method 300 includes determining, via a model execution module of the controller, a sequence for executing a subset of a plurality of machine-learned models based on one or more hyperparameters of the plurality of machine-learned models and one or more infrastructure constraints. As used herein, an "infrastructure constraint" generally refers to a variable representing available resources for performing a quality inspection of a rotor blade 112 at a manufacturing and/or inspection facility. Thus, in an embodiment, the infrastructure constraint(s) may include available computational resources for executing machine-learned models to detect anomalies, an amount of time within which to detect anomalies, available data storage to store data associated with anomaly detection, network connectivity parameters (e.g., a communication speed, a bandwidth, a cost, etc.), and/or any other suitable resource that may limit execution of one or more machine-learned models to detect anomalies on the rotor blade 112.

More particularly, the model execution module can determine the sequence for executing a subset of a plurality of machine-learned models by comparing the hyperparameter(s) of the plurality of machine-learned models to the infrastructure constraint(s). For instance, the model execution module can be configured to determine computational resources and an amount of time required to execute each of the plurality of machine-learned models based on the respective hyperparameter(s) of the plurality of machine-learned models. The model execution module can, for example, be further configured to compare the required computational resources and amount of time to the available computational resources and the available amount of time specified by the infrastructure constraint(s).

As such, the model execution module can identify the subset of the plurality of machine-learned models that can be executed given the infrastructure constraint(s). In addition, the model execution module can determine (e.g., via implementation of one or more optimization techniques) the sequence in which to execute the subset of the plurality of machine-learned models given the infrastructure constraint(s). More particularly, the sequence can be configured to optimize execution of the subset of the plurality of machine-learned models given the infrastructure constraint(s). That is, the model execution module can determine the sequence to optimally utilize available resources so as to execute a maximum number of machine-learned models given the infrastructure constraint(s), which can increase efficiency of the quality inspection for the rotor blade 112.

In embodiments, the infrastructure constraint(s) may change over time. As such, the model execution module may receive the infrastructure constraint(s) continuously or at specified time intervals (e.g., from a remote server computer via a communication link or network). Accordingly, the model execution module can be configured to update the sequence and/or the subset of the plurality of machine-learned models dynamically based, at least in part, on the updated (e.g., most recent) infrastructure constraint(s). That is, the sequence and/or the subset may change over time in response to changes to the infrastructure constraint(s).

Further, in embodiments, the model execution module may be configured to determine the hyperparameter(s) for each of the plurality of machine-learned models. For instance, the hyperparameters may be specified in each of the plurality of machine-learned models. Accordingly, the model execution module can receive (e.g., from a remote server computer via a communication link or network) each of the plurality of machine-learned models. As such, the model execution module can be configured to the access each of the plurality of machine-learned models to determine the respective hyperparameters. In some embodiments, at least one machine-learned model may be updated. As such, the model execution module can receive (e.g., from a remote server computer via a communication link or network) the updated machine-learned model(s) and can access the updated machine-learned model(s) to determine respective updated hyperparameters. Accordingly, the model execution module can be configured to update the sequence and/or the subset of the plurality of machine-learned models dynamically based, at least in part, on the updated (i.e., most recent) hyperparameter(s) of the plurality of machine-learned models. That is, the sequence and/or the subset may change over time in response to changes to the hyperparameter(s).

The hyperparameter(s) indicate resources required for executing a machine-learned model. For example, the hyperparameters may include, but are not limited to a video sampling rate (e.g., that specifies a number of images in an input dataset), an image resolution (e.g., that specifies defect measurement accuracy), a precision rate (e.g., that specifies defect coverage), a recall rate (e.g., that specifies how small false-positives can be), and/or any other configurable setting that is set before model training and controls the learning process and execution of the machine-learned model.

Furthermore, each of the plurality of machine-learned models is configured to detect a different type of anomaly relating to the rotor blade 112. Thus, the identified anomalies can be identified by type (e.g., cracks, voids, gaps, dents, missing components, over lamination, loose ends, foreign objects or debris, etc.) as well as location, severity, etc. Further, the plurality of machine-learned models comprises each of the machine-learned models accessible (e.g., via cloud storage, a communication link or network, etc.) by a manufacturing and/or inspection facility. In some embodiments, the subset of the plurality of machine-learned models includes some of the plurality of machine-learned models. In other embodiments, the subset of the plurality of machine-learned models includes each of the plurality of machine-learned models.

Referring still to FIG. 4, as shown at (308), the method 300 includes executing, via the model execution module, the subset of the plurality of machine-learned models based on the sequence. That is, each of the machine-learned models in the subset of the plurality of machine-learned models can be executed in succession according to the sequence determined at (306). More particularly, the processed data relating to the rotor blade 112 can be sequentially provided as input to each of the machine-learned models in the subset of plurality of machine-learned models. Executing the subset of the plurality of machine-learned models according to the sequence can maximize a number of different types of anomalies that can be detected given the infrastructure constraint(s).

Further, as shown at (310), the method 300 includes identifying, via the subset of the plurality of machine-learned models, one or more anomalies of the rotor blade 112 of the wind turbine 100 using the processed data relating to the rotor blade 112. More particularly, each of the machine-learned models in the subset of the plurality of machine-learned models can be trained to provide an output identifying whether or not a respective type of anomaly is present in the processed data relating to the rotor blade 112.

Thus, as shown at (312), the method 300 includes implementing, via the processor, a corrective action for the anomaly of the rotor blade or a subsequent manufacturing process of another rotor blade based on the anomaly of the rotor blade 112. For example, in an embodiment, the corrective action may include scheduling a repair to correct the anomaly, modifying a manufacturing parameter, halting production of subsequent rotor blades until the anomaly is corrected, or similar.

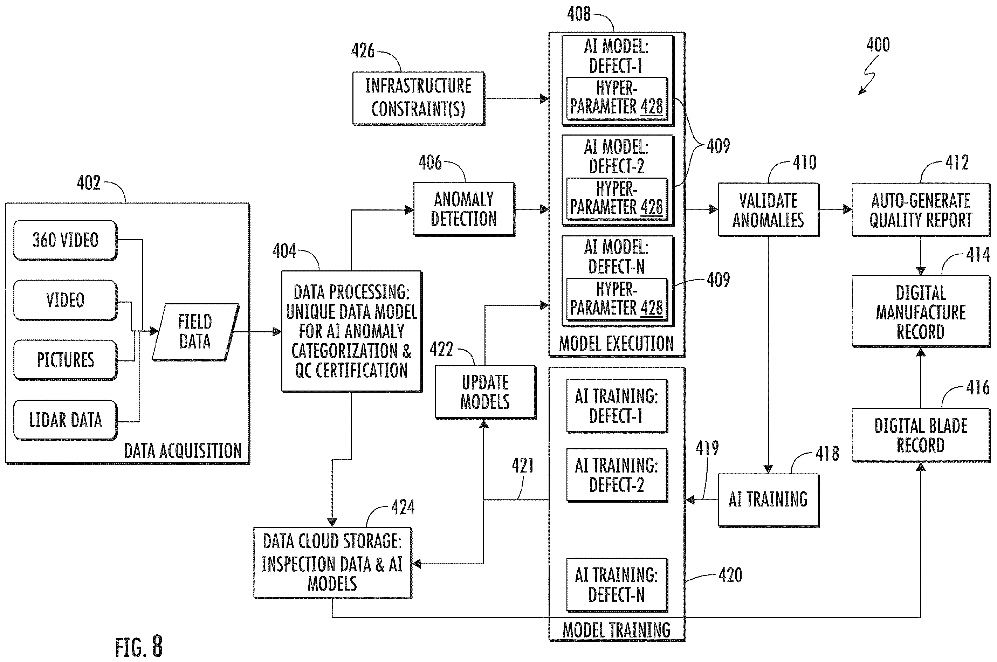

The method 300 of FIG. 4 can be better understood with reference to FIG. 8. In particular, FIG. 8 illustrates a schematic diagram of an embodiment of a system 400 for improving quality of a rotor blade of a wind turbine, such as rotor blade 112, during manufacturing according to the present disclosure. In an embodiment, the system 400 may include a computer-implemented controller having at least one processor and/or modules, similar to the controller 200 described herein.

For example, as shown, the system 400 includes a data acquisition module 402 for receiving the data relating to the rotor blade 112. As mentioned, and as shown, the data relating to the rotor blade 112 may include high resolution data such as one or more 360° videos of the rotor blade 112, one or more 180° videos of the rotor blade 112, one or more images/pictures of the rotor blade 112, LIDAR data, field data, or similar.

In addition, as shown, the system 400 further includes a data processing module 404 for receiving the data relating to the rotor blade 112 from the data acquisition module 402. As such, the data processing module 404 is configured to apply a unique data model for artificial intelligence (AI) anomaly categorization and quality control certification. For example, in an embodiment, the system 400 is configured to process the data by extracting one or more images/pictures from one or more videos collected by the data acquisition module 402. Thus, in an embodiment, the system 400 can then correlate the image(s) to an actual location on the rotor blade 112 using a model representation of the rotor blade 112. In other words, such processing provides a correlation of a pixel representation of the rotor blade 112 with a geometric representation of the rotor blade 112. In an embodiment, a purpose of correlating the image(s) to an actual location on the rotor blade 112 using the model representation of the rotor blade 112 is to allow for measurements to be made of the anomaly. The size of the anomaly (in addition to type of anomaly) has an impact on downstream processes (e.g., which corrective action is appropriate).

Further, as shown, the system 400 may include cloud storage 424 for storing the data processed by the data processing module 404. Furthermore, the cloud storage 424 can receive and store results of all inspection methods followed during manufacturing which include visual inspection and repair, ultrasound, stress tests, etc. Moreover, the cloud storage 424 can store a plurality of AI-driven/machine-learned models 409 for detecting anomalies on the rotor blade 112. As such, various manufacturing and/or inspection facilities may be permitted to access the cloud storage 424 to implement (e.g., simultaneously) the system 400 for improving quality of a rotor blade of a wind turbine. Further, each of the various manufacturing and/or inspection facilities may include different and dynamic infrastructure constraint(s) 426, as mentioned above, that permits the manufacturing and/or inspection facilities to access the cloud storage 424 for implementing the system 400, and more particularly, the plurality of AI-driven/machine-learned models 409 for detecting anomalies on the rotor blade 112.

Still referring to FIG. 8, as shown at 406, the system 400 is configured to apply one or more AI-driven/machine-learned anomaly detection models 409 to the processed data. In particular, as shown, the system 400 includes a model execution module 408 for implementing the plurality of AI-driven/machine-learned models 409 for detecting anomalies on the rotor blade 112. Such anomalies may include, for example, cracks, voids, gaps, dents, missing components, over lamination, loose ends, foreign objects or debris, or any other anomaly that is detected or otherwise learned by the model(s) 409. Thus, in such embodiments, as mentioned, each of the plurality of machine-learned models 409 is configured to detect a different type of anomaly relating to the rotor blade 112.

More particularly, the model execution module 408 is configured to determine a sequence for executing a subset of the machine-learned models 409 of the controller based on hyperparameter(s) 428 of the plurality of machine-learned models 409 and infrastructure constraint(s) 426. As mentioned, the subset may include all or some of the plurality of machine-learned models 409. In an embodiment, for example, the model execution module 408 can compare the infrastructure constraint(s) 426 and the hyperparameter(s) 428 to identify the subset of the plurality of machine-learned models 409. Further, model execution module 408 can determine (e.g., via one or more optimization techniques) the sequence in which to execute the subset of the plurality of machine-learned models 409 such that the sequence optimally utilizes available resources to execute the subset of the machine-learned models 409 given the infrastructure constraint(s) 426, as mentioned.

Furthermore, the model execution module 408 may be configured to receive the infrastructure constraint(s) 426 and/or the hyperparameter(s) 428 continuously or at specified time intervals, as mentioned. As such, the model execution module 408 may be configured to dynamically update the sequence and/or the subset of the plurality of machine-learned models 409 based on updated (i.e., most recent) infrastructure constraint(s) 426 and/or updated (i.e., most recent) hyperparameter(s) 428. Dynamically updating the sequence and/or the subset of the plurality of machine-learned models 409 can increase a likelihood of optimally utilizing available resources to inspect rotor blades 112 at any given time. Since various manufacturing and/or inspection facilities may be inspecting large quantities of rotor blades 112 at any given time, optimally utilizing the resources available at the various manufacturing and/or inspection facilities improves a quality of the inspections, which increases a likelihood of detecting and/or correcting anomalies and thereby increasing a quality of the rotor blades 112 produced.

The AI-driven /machine-learned models described herein may include neural networks (e.g., deep neural networks) or other types of machine-learned models, including non-linear models and/or linear models. Neural networks can include feed-forward neural networks, recurrent neural networks (e.g., long short-term memory recurrent neural networks), convolutional neural networks or other forms of neural networks. Some example machine-learned models can leverage an attention mechanism, such as self-attention. For example, some example machine-learned models can include multi-headed self-attention models (e.g., transformer models). In another embodiment, the AI/machine-learned models described herein may include a rule-based approach, wherein actions are chosen based on a pre-determined set of if-then rules or mathematical expressions with pre-defined parameters.

Once the anomaly(ies) are detected, the system 400 is configured to evaluate the competency level/validate the anomaly(ies) to ensure accuracy and/or eliminate false positives. For example, as shown, the system 400 may include a validation model 410 for validating the anomaly(ies). In an embodiment, for example, the validation model 410 may determine a statistical competence level of the anomaly(ies). In such embodiments, as an example, the statistical competence level may be an unsupervised-learning model. Furthermore, in an embodiment, the validation model 410 may use density estimation for determining whether the anomaly(ies) is of a certain competence level. In particular embodiments, the validation model 410 is configured to compare the anomaly(ies) to pre-validated or trained anomalies stored in the validation model 410. In further embodiments, the plurality of machine-learned models 409 and/or the validation model 410 may be an unsupervised learning-based model, a supervised learning-based model, a self-supervised learning-based model, or any other suitable learning-based model.

Accordingly, in such embodiments, the validation model 410 may give an inherent assessment of a competency of the anomaly(ies) based on an uncertainty level of its prediction, such as in the case of ensemble models, Bayesian models (including Gaussian processes), non-conformal prediction intervals, or other methods that can provide prediction uncertainty. Alternatively, an assessment of the competency of the anomaly(ies) can be learned from training data using density estimation, level-set estimation, one-class classifier, manifold learning, anomaly detection, or other supervised or unsupervised learning approaches. Additionally, the system 400 may use both internal and external assessment of the competency of the anomaly(ies). In this way, for a particular anomaly detected, the validation model 410 can assess its level of competence and if competent, then the system 400 can generate a quality report 412 as described herein.

In some embodiments, the system 400 is further configured to calculate a competence level for a given anomaly. For example, if the generated anomaly from one of the machine-learned models 409 is the same or similar to the given anomaly, the competence level may be relatively high, and if the generated anomaly from one of the machine-learned models 409 is different or dissimilar to the given anomaly, the competence level may be relatively low. In such embodiments, the system 400 is configured to indicate the competence level in the quality report 412.

After optionally validating the anomaly(ies), the system 400 can be configured to automatically generate the quality report 412 of the rotor blade 112 that includes the identified anomaly(ies). For example, in such embodiments, the quality report 412 may generally include a location, type, and/or criticality of the identified anomaly(ies). Accordingly, in an embodiment, the quality report 412 may include a quality certification of the rotor blade 112. More specifically, as shown at 414, the system 400 can be configured to generate a digital manufacture record of the rotor blade 112. Thus, as shown at 416, the system 400 can be configured to generate a digital blade record of the rotor blade 112.

As used herein, a digital manufacture record 414 generally refers to a digital signature for every manufactured blade, that digitally records all of the anomalies recorded during the various stages of manufacturing for that specific blade and how these anomalies were repaired or addressed. Furthermore, in an embodiment, the quality report 412, which is generally required to pass manufacturing may be part of the digital manufacture record 414. Accordingly, in an embodiment, the digital blade record 416 will, in its entirety, record the results of the inspection methods followed during manufacturing. As such, a useful aspect of the digital manufacture record 414 is in the lifetime maintenance of the rotor blade 112. The digital manufacture record 414 may also act as a guide to accurately disposition and repair blade anomalies in the field in order to improve performance and extend the life of the rotor blade 112.

Moreover, in an embodiment, as shown, the system 400 may also include a model retraining module 420 and an AI training module 418. Thus, the system 400 is configured to continuously train and update the plurality of machine-learned models 409 with training data 419, 421 from the model retraining module 420 and/or the AI training module 418. For example, in an embodiment, if the validation model 410 determines that certain anomalies are identified correctly (or incorrectly), the plurality of machine-learned models 409 can be retrained and updated with such information such that the models 409 can learn from previous mistakes and improve accuracy going forward. In addition, the training data 419 may include new data as new anomalies are identified that can be fed into the model retraining module 420. Thus, as shown at 422, the training data 419 as well as data 421 from the model retraining module 420 can be fed into the plurality of machine-learned models 409. As such, the system 400 is configured to continuously learn of existing and new anomalies and train the plurality of machine-learned models 409 using the existing and new anomalies. Furthermore, the AI/machine-learned model(s) 409 described herein may be trained using human annotated data, data compiled during the data acquisition phase, and/or historical data or new data collected during various manufacturing processes of the rotor blades 112 described herein.

Moreover, the training data described herein may include historical, current, and/or estimated data relating to rotor blade manufacturing. Thus, human experts can specifically assign anomaly types, locations, and/or criticalities to images and/or videos of rotor blades that can be fed into the models 409. Accordingly, the plurality of machine-learned models 409 can be trained on such data and can improve over time with new input data. More specifically, in an embodiment, the system 400 may determine parameters for avoiding certain anomalies in the future.

Furthermore, in an embodiment, the system 400 is configured to implement a corrective action based on the quality report 412. For example, in an embodiment, implementing the corrective action based on the quality report 412 may include storing the quality report 412 in a database, scheduling a repair to correct the identified anomaly(ies), modifying a manufacturing parameter of the rotor blade manufacturing process (such as modifying a blade mold, blade materials, thicknesses, blade sizing, temperature, resin, fiber materials, etc.), halting production of subsequent rotor blades until the identified anomaly(ies) are corrected, updating one or more of the plurality of machine-learned models 409, training one or more of the plurality of machine-learned models 409, and/or any suitable corrective action. In another embodiment, the system 400 may also be configured to collect and/or store the corrective action for continued learning of the plurality of machine-learned models 409. For example, in an embodiment, if a particular rotor blade is repaired due to an anomaly being detected, the repair can be noted on the digital blade record 416 of the rotor blade 112 and input into one or more of the model(s) 409 for updating the model(s) to avoid a similar anomaly in the future.

Exemplary embodiments of a method and system for improving quality of a wind turbine rotor blade during manufacturing are described herein. The systems and methods of the present disclosure are not limited to the specific embodiments described herein, but rather, components of systems and/or steps of the methods may be utilized independently and separately from other components and/or steps described herein. For example, the methods may also be used in combination with other electronic systems and are not limited to practice with only the electronic systems, and methods as described herein. Rather, the exemplary embodiment can be implemented and utilized in connection with many other electronic systems.

Some embodiments involve the use of one or more electronic or computing devices. Such devices typically include a processor, processing device, or controller, such as a general purpose central processing unit (CPU), a graphics processing unit (GPU), a microcontroller, a reduced instruction set computer (RISC) processor, an application specific integrated circuit (ASIC), a programmable logic circuit (PLC), a field programmable gate array (FPGA), a digital signal processing (DSP) device, and/or any other circuit or processing device capable of executing the functions described herein. The methods described herein may be encoded as executable instructions embodied in a computer readable medium, including, without limitation, a storage device and/or a memory device. Such instructions, when executed by a processing device, cause the processing device to perform at least a portion of the methods described herein. The above examples are exemplary only, and thus are not intended to limit in any way the definition and/or meaning of the term processor and processing device. Furthermore, in an embodiment, the processing capability might be located at the wind turbine, at the wind farm, or in the cloud infrastructure.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

Further aspects of the invention are provided by the subject matter of the following clauses:
A method for improving quality of a rotor blade of a wind turbine, the method comprising: receiving, via a data acquisition module of a controller, data relating to the rotor blade, the data relating to the rotor blade collected during or after manufacturing of the rotor blade before the rotor blade is placed into operation on the wind turbine; processing, via a processor of the controller, the data relating to the rotor blade; determining, via a model execution module of the controller, a sequence for executing a subset of a plurality of machine-learned models based on one or more hyperparameters of the plurality of machine-learned models and one or more infrastructure constraints; executing, via the model execution module, the subset of the plurality of machine-learned models based on the sequence; identifying, via the subset of the plurality of machine-learned models, one or more anomalies on the rotor blade using the processed data relating to the rotor blade; and implementing, via the processor, a corrective action for the one or more anomalies of the rotor blade or a subsequent manufacturing process of another rotor blade based on the one or more anomalies of the rotor blade.

The method of any preceding clause, wherein the one or more hyperparameters comprise at least one of a sampling rate, a resolution, a precision rate, and a recall rate.

The method of any preceding clause, wherein the one or more infrastructure constraints comprise at least one of an available compute, a memory storage, a network speed, and an amount of time.

The method of any preceding clause, further comprising: continuously receiving, via the model execution module, one or more updated infrastructure constraints; and updating at least one of the sequence and the subset based, at least in part, on the one or more updated infrastructure constraints.

The method of any preceding clause, further comprising: receiving, via the model execution module, one or more updated hyperparameters; and updating at least one of the sequence and the subset based, at least in part, on the one or more updated hyperparameters.

The method of any preceding clause, further comprising operating an intelligent vehicle across a surface of the rotor blade to collect the data relating to the rotor blade during or after manufacturing thereof before the rotor blade is placed into operation on the wind turbine.

The method of any preceding clause, wherein each of the plurality of machine-learned models is configured to detect a different type of anomaly relating to the rotor blade.

The method of any preceding clause, wherein the data relating to the rotor blade further comprises high resolution data comprising at least one of one or more 360° videos of the rotor blade during manufacturing, one or more 180° videos of the rotor blade during manufacturing, one or more images of the rotor blade, Light Detection and Ranging (LIDAR) data, or field data.

The method of any preceding clause, wherein the plurality of machine-learned models comprise at least one of an unsupervised learning-based model, a supervised learning-based model, or a self-supervised learning-based model.

The method of any preceding clause, wherein implementing the corrective action for the one or more anomalies of the rotor blade or the subsequent manufacturing process of another rotor blade based on the anomaly of the rotor blade further comprises at least one of scheduling a repair to correct the anomaly, modifying a manufacturing parameter, or halting production of subsequent rotor blades until the anomaly is corrected.

A system for improving quality of a rotor blade of a wind turbine, the system comprising: a controller comprising at least one processor and a data acquisition module, the data acquisition module configured to receive data relating to the rotor blade, the data relating to the rotor blade collected during or after manufacturing of the rotor blade before the rotor blade is placed into operation on the wind turbine, wherein the at least one processor is configured to perform a plurality of operations, the plurality of operations comprising: processing the data relating to the rotor blade; determining, via a model execution module of the controller, a sequence for executing a subset of a plurality of machine-learned models based on one or more hyperparameters of the plurality of machine-learned models and one or more infrastructure constraints; executing, via the model execution module, the subset of the plurality of machine-learned models based on the sequence; identifying, via the subset of the plurality of machine-learned models, one or more anomalies on the rotor blade using the processed data relating to the rotor blade; and implementing a corrective action for the one or more anomalies of the rotor blade or a subsequent manufacturing process of another rotor blade based on the one or more anomalies of the rotor blade.

The system of any preceding clause, wherein the one or more hyperparameters comprise at least one of a sampling rate, a resolution, a precision rate, and a recall rate.

The system of any preceding clause, wherein the one or more infrastructure constraints comprise at least one of an available compute, a memory storage, a network speed, and an amount of time.

The system of any preceding clause, wherein the operations further comprise: continuously receiving, via the model execution module, one or more updated infrastructure constraints; and updating at least one of the sequence and the subset based, at least in part, on the one or more updated infrastructure constraints.

The system of any preceding clause, wherein the operations further comprise: receiving, via the model execution module, one or more updated hyperparameters; and updating at least one of the sequence and the subset based, at least in part, on the one or more updated hyperparameters.

The system of any preceding clause, further comprising an intelligent vehicle operable across a surface of the rotor blade to collect the data relating to the rotor blade during or after manufacturing thereof before the rotor blade is placed into operation on the wind turbine.

The system of any preceding clause, wherein each of the plurality of machine-learned models is configured to detect a different type of anomaly relating to the rotor blade.

The system of any preceding clause, wherein the data relating to the rotor blade further comprises high resolution data comprising at least one of one or more 360° videos of the rotor blade during manufacturing, one or more 180° videos of the rotor blade during manufacturing, one or more images of the rotor blade, Light Detection and Ranging (LIDAR) data, or field data.

The system of any preceding clause, wherein the plurality of machine-learned models comprise at least one of an unsupervised learning-based model, a supervised learning-based model, or a self-supervised learning-based model.

The system of any preceding clause, wherein implementing the corrective action for the one or more anomalies of the rotor blade or the subsequent manufacturing process of another rotor blade based on the anomaly of the rotor blade further comprises at least one of scheduling a repair to correct the anomaly, modifying a manufacturing parameter, or halting production of subsequent rotor blades until the anomaly is corrected.

This written description uses examples to disclose the invention, including the best mode, and to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method for improving quality of a rotor blade of a wind turbine, the method comprising:
receiving, via a data acquisition module of a controller, data relating to the rotor blade, the data relating to the rotor blade collected during or after manufacturing of the rotor blade before the rotor blade is placed into operation on the wind turbine;
processing, via a processor of the controller, the data relating to the rotor blade;
determining, via a model execution module of the controller, a sequence for executing a subset of a plurality of machine-learned models based on one or more hyperparameters of the plurality of machine-learned models and one or more infrastructure constraints;
executing, via the model execution module, the subset of the plurality of machine-learned models based on the sequence;
identifying, via the subset of the plurality of machine-learned models, one or more anomalies on the rotor blade using the processed data relating to the rotor blade; and
implementing, via the processor, a corrective action for the one or more anomalies of the rotor blade or a subsequent manufacturing process of another rotor blade based on the one or more anomalies of the rotor blade.

2. The method of claim 1, wherein the one or more hyperparameters comprise at least one of a sampling rate, a resolution, a precision rate, and a recall rate.

3. The method of claim 1 or 2, wherein the one or more infrastructure constraints comprise at least one of an available compute, a memory storage, a network speed, and an amount of time.

4. The method of any one of the preceding claims, further comprising:
continuously receiving, via the model execution module, one or more updated infrastructure constraints; and
updating at least one of the sequence and the subset based, at least in part, on the one or more updated infrastructure constraints.

5. The method of any one of the preceding claims, further comprising:
receiving, via the model execution module, one or more updated hyperparameters; and
updating at least one of the sequence and the subset based, at least in part, on the one or more updated hyperparameters.

6. The method of any one of the preceding claims, further comprising operating an intelligent vehicle across a surface of the rotor blade to collect the data relating to the rotor blade during or after manufacturing thereof before the rotor blade is placed into operation on the wind turbine.

7. The method of any one of the preceding claims, wherein each of the plurality of machine-learned models is configured to detect a different type of anomaly relating to the rotor blade.

8. The method of any one of the preceding claims, wherein the data relating to the rotor blade further comprises high resolution data comprising at least one of one or more 360° videos of the rotor blade during manufacturing, one or more 180° videos of the rotor blade during manufacturing, one or more images of the rotor blade, Light Detection and Ranging (LIDAR) data, or field data.

9. The method of any one of the preceding claims, wherein the plurality of machine-learned models comprise at least one of an unsupervised learning-based model, a supervised learning-based model, or a self-supervised learning-based model.

10. The method of any one of the preceding claims, wherein implementing the corrective action for the one or more anomalies of the rotor blade or the subsequent manufacturing process of another rotor blade based on the anomaly of the rotor blade further comprises at least one of scheduling a repair to correct the anomaly, modifying a manufacturing parameter, or halting production of subsequent rotor blades until the anomaly is corrected.

11. A system for improving quality of a rotor blade of a wind turbine, the system comprising:
a controller comprising at least one processor and a data acquisition module, the data acquisition module configured to receive data relating to the rotor blade, the data relating to the rotor blade collected during or after manufacturing of the rotor blade before the rotor blade is placed into operation on the wind turbine, wherein the at least one processor is configured to perform a plurality of operations, the plurality of operations comprising:
processing the data relating to the rotor blade;
determining, via a model execution module of the controller, a sequence for executing a subset of a plurality of machine-learned models based on one or more hyperparameters of the plurality of machine-learned models and one or more infrastructure constraints;
executing, via the model execution module, the subset of the plurality of machine-learned models based on the sequence;
identifying, via the subset of the plurality of machine-learned models, one or more anomalies on the rotor blade using the processed data relating to the rotor blade; and
implementing a corrective action for the one or more anomalies of the rotor blade or a subsequent manufacturing process of another rotor blade based on the one or more anomalies of the rotor blade.

12. The system of claim 11, wherein the one or more hyperparameters comprise at least one of a sampling rate, a resolution, a precision rate, and a recall rate and/or
wherein the one or more infrastructure constraints comprise at least one of an available compute, a memory storage, a network speed, and an amount of time and/or
wherein the operations further comprise:
continuously receiving, via the model execution module, one or more updated infrastructure constraints; and
updating at least one of the sequence and the subset based, at least in part, on the one or more updated infrastructure constraints and/or
wherein the operations further comprise:
receiving, via the model execution module, one or more updated hyperparameters; and
updating at least one of the sequence and the subset based, at least in part, on the one or more updated hyperparameters.

13. The system of claim 11 or 12, further comprising an intelligent vehicle operable across a surface of the rotor blade to collect the data relating to the rotor blade during or after manufacturing thereof before the rotor blade is placed into operation on the wind turbine.

14. The system of claim 11, 12 or 13, wherein each of the plurality of machine-learned models is configured to detect a different type of anomaly relating to the rotor blade and/or
wherein the data relating to the rotor blade further comprises high resolution data comprising at least one of one or more 360° videos of the rotor blade during manufacturing, one or more 180° videos of the rotor blade during manufacturing, one or more images of the rotor blade, Light Detection and Ranging (LIDAR) data, or field data and/or
wherein the plurality of machine-learned models comprise at least one of an unsupervised learning-based model, a supervised learning-based model, or a self-supervised learning-based model.

15. The system of any of the claims 11 - 14, wherein implementing the corrective action for the one or more anomalies of the rotor blade or the subsequent manufacturing process of another rotor blade based on the anomaly of the rotor blade further comprises at least one of scheduling a repair to correct the anomaly, modifying a manufacturing parameter, or halting production of subsequent rotor blades until the anomaly is corrected.
